**Europäisches Patentamt**

**European Patent Office**

**Office européen des brevets**

(19)

(11) Veröffentlichungsnummer : **0 427 700 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **C05F 7/00,** C05D 3/02

(21) Anmeldenummer : **90890274.5**

(22) Anmeldetag : **09.10.90**

(54) **Verfahren zur Herstellung eines Düngemittels.**

(30) Priorität : **10.10.89 AT 2337/89**

(43) Veröffentlichungstag der Anmeldung :
**15.05.91 Patentblatt 91/20**

(45) Bekanntmachung des Hinweises auf die
Patenterteilung :
**11.03.92 Patentblatt 92/11**

(84) Benannte Vertragsstaaten :
**BE CH DE DK FR GB IT LI NL**

(56) Entgegenhaltungen :
**FR-A- 942 085**
**US-A- 1 501 914**
**STÄRKE, Band 30, Nr. 11, 1978, Seiten 387-392,**
**Weinheim, DE; J. DRENT: "Application possi-**
**bilities of potato starch process water in agri-**
**culture"**

(73) Patentinhaber : **AGENA**
**STÄRKE-GESELLSCHAFT M.B.H.**
**Hollandstrasse 2**
**A-1020 Wien (AT)**

(72) Erfinder : **Marihart, Johann, Dipl.-Ing.**
**Conrathstrasse 7**
**A-3950 Gmünd (AT)**

(74) Vertreter : **Pfeifer, Otto et al**
**Patentanwälte Dr. Alfred Schütz, dipl.-Ing.**
**Walter Holzer, Dipl.-Ing. Otto Pfeifer**
**Fleischmanngasse 9 A-1040 Wien (AT)**

**Beschreibung**

Die vorliegende Erfindung bezieht sich auf ein Verfahren zur Herstellung eines Düngemittels mit einem hohen Kalkgehalt und mit zusätzlichen Anteilen an Stickstoff, Phosphor, Kalium und Magnesium, ausgehend von Karbonatationskalk und Kartoffelrestfruchtwasser.

In den der Landwirtschaft nachgeordneten Produktionen fallen häufig flüssige Rückstände in Form von Schlempen, Restfruchtwasser und dergleichen an, die einer geordneten Entsorgung zugeführt werden müssen. So entstehen bei der Herstellung von Kartoffelstärke erhebliche Mengen an Kartoffelrestfruchtwasser, die bisher durch Verregnung auf landwirtschaftlich genutzte Flächen entsorgt wurden. Eine derartige Verregnung stößt jedoch zunehmend auf Bedenken seitens des Umweltschutzes, vor allem wegen häufig erfolgender Überdosierung, die zu Kalium- und Nitratproblemen im Boden führen kann. Hinzu kommt, daß eine Verregnung von Kartoffelrestfruchtwasser in Frostperioden auf gefrorenen Böden nicht vorgenommen werden kann.

Es hat nicht an Versuchen gefehlt, das Kartoffelrestfruchtwasser einer Aufarbeitung zuzuführen, statt es zu verregnen. Ein Aufkonzentrieren mittels Membranverfahren (Ultrafiltration und Reversosmose) scheiterte jedoch an den hohen Kosten und den geringen Standzeiten der Membranen. Eine direkte Trocknung ist wegen des hohen Salzgehaltes und der dadurch bedingten starken Hygroskopizität des getrockneten Produktes nicht möglich. Einer Verfeuerung stehen die niedrigen Schmelzpunkte der Schlacke zufolge des Kalisalzgehaltes entgegen.

Weitere Vorschläge zur Entsorgung von in der der Landwirtschaft nachgeordneten Produktion anfallenden Rückständen sind in der SU-A-821 439, in der JP-A-52-117 776 und in der JP-A-57-196 783 beschrieben. Die russische Literaturstelle bezieht sich auf die Verarbeitung von häuslichen oder landwirtschaftlichen Abwässern und schlägt mechanische und biologische Reinigungsstufen, eine chemische Behandlung, einen Zusatz von Kohlendioxidgas und anschließende Filtrier- und Ionenaustauschstufen vor, um ein Düngemittel zu erhalten. Die beiden japanischen Literaturstellen betreffen die Aufarbeitung von Ablaugen aus der Alkoholgärung durch Zusatz von Calciumcarbonat oder Löschkalk zur Ausbildung eines nicht staubenden Kalkdüngemittels.

Im Hinblick auf den steigenden Bedarf nach Kartoffelstärke stellt eine umweltschonende geordnete Entsorgung der zwangsläufig anfallenden Mengen an Kartoffelrestfruchtwasser ein dringendes Problem dar.

Auch in einem anderen Bereich der der Landwirtschaft nachgeordneten Produktion, nämlich in der Zuckerindustrie, fallen Nebenprodukte an, die einer Entsorgung bedürfen. So wurde bisher der in den Zuckerfabriken als Nebenprodukt anfallende Karbonatationskalk zum Teil deponiert, zum anderen Teil als Düngerkalk an die Kontrahenten der Zuckerfabriken abgegeben.

Es wurde nunmehr gefunden, daß sich die Probleme der Entsorgung von in der Zuckerindustrie als Nebenprodukt anfallendem Karbonatationskalk einerseits und von flüssigen Rückständen aus der der Landwirtschaft nachgeordneten Produktion, im speziellen von Kartoffelrestfruchtwasser, anderseits dadurch beseitigen lassen, daß der Karbonatationskalk und die erwähnten flüssigen Rückstände gemeinsam zu einem Düngemittel verarbeitet werden.

Gegenstand der vorliegenden Erfindung ist somit ein Verfahren zur Herstellung eines Düngemittels mit hohem Kalkgehalt und mit zusätzlichen Anteilen an Stickstoff, Phosphor, Kalium und Magnesium, aus Karbonatationskalk und Kartoffelrestfruchtwasser, das sich dadurch auszeichnet, daß man in der Zuckerindustrie als Nebenprodukt anfallenden Karbonatationskalk auf einen Trockengehalt von etwa 98 Gew.-% trocknet und mit auf etwa 75 Gew.-% Trockengehalt eingedicktem Kartoffelrestfruchtwasser im Mischungsverhältnis von Karbonatationskalk zu Kartoffelrestfruchtwasser von 90:10 bis 50:50 vermischt. Hiebei wird vorteilhaft ein möglichst hoher Kartoffelrestfruchtwasser-Anteil, beispielsweise mindestens 40 %, bezogen auf Trockensubstanz, angestrebt.

In der praktischen Ausführung des erfindungsgemäßen Verfahrens, angewendet auf die gemeinsame Aufarbeitung von Karbonatationskalk und Kartoffelrestfruchtwasser, können beispielsweise die folgenden Verfahrensschritte vorgenommen werden:

– Trocknung des Karbonatationskalkes von etwa 70 % Trockensubstanz nach der Kammerfilterpresse auf 98 % Trockensubstanz, beispielsweise durch indirekte Beheizung oder mit geschlossenem Luftkreislauf.

– Eindampfen des Kartoffelrestfruchtwassers von etwa 4 % Trockensubstanz auf etwa 50 % Trockensubstanz in einer herkömmlichen mehrstufigen Verdampfungsstation, mit oder ohne Brüdenkompression.

– Eindicken des erhaltenen Kartoffelrestfruchtwasser-Vorkonzentrates von 50 % Trockensubstanz auf etwa 75% Trockensubstanz, beispielsweise mittels Dünnschichtverdampfer mit mechanischer Heizflächenreinigung.

– Mischen des Kartoffelrestfruchtwasser-Konzentrats von etwa 75 % Trockensubstanz mit dem Karbonatationskalk von etwa 98 % Trockensubstanz im angestrebten Verhältnis, beispielsweise 60 % Karbonatationskalk zu 40 % Kartoffelrestfruchtwasser, jeweils bezogen auf Trockensubstanz.

– Trocknung des erhaltenen Gemisches auf 95 bis 98 % Trockensubstanz und Nachbehandlung zur Ausbildung eines staubfreien Produktes.

Das neue Düngemittel wirkt bei fachgerechtem Einsatz wie ein reaktiver Kalkdünger und erspart im Jahr der Anwendung den Einsatz weiterer Düngemittel. Bei einer Gabe ab etwa 4.000 kg pro ha und Jahr ist das dadurch erreichbare Nährstoffangebot den Bedürfnissen von Zuckerrüben, Mais und Kartoffeln gut angepaßt.

Nachstehend werden typische Analysenwerte von im erfindungsgemäßen Verfahren einsetzbarem Karbonatationskalk und Kartoffelrestfruchtwasser bzw. eines erfindungegemäß erhaltenen Düngemittels angegeben:

## Analysenwerte von Karbonatationskalk aus österreichischen Zuckerfabriken

### (Durchschnittswerte, bezogen auf 100 % Trockensubstanz)

| | |
|---|---|
| Trockensubstanz | 100,0 % |
| Kalk (als CaO) | 48,8 % |
| Kalium (als $K_2O$) | 0,16 % |
| Phosphor (als $P_2O_5$) | 0,80 % |
| Magnesium (als MgO) | 1,5 % |
| Natrium (als $Na_2O$) | 0,09 % |
| Stickstoff (Kjeldahl) | 0,52 % |

## Analysenwerte von Kartoffelrestfruchtwasser:

| | naturfeucht: % | absolut trocken: % |
|---|---|---|
| Wasser $H_2O$ | 96,32 | 0 |
| Trockensubstanz | 3,68 | 100 |
| Asche | 1,14 | 30,98 |
| Organischer Anteil | 2,54 | 69,02 |
| Gesamt-Stickstoff N | 0,316 | 8,585 |
| Nitrat-Stickstoff $NO_3$-N | 0,016 | 0,435 |
| Ammoniak Stickstoff $NH_3$-N | 0,013 | 0,361 |
| organ.gebund.Stickstoff | 0,287 | 7,790 |
| Gesamt-Phosphorsäure $P_2O_5$ | 0,099 | 2,690 |
| Gesamt-Kali $K_2O$ | 0,58 | 15,76 |
| Kalk CaO | 0,008 | 0,217 |
| Magnesium MgO | 0,056 | 1,522 |
| Natrium $Na_2O$ | 0,009 | 0,245 |
| Chlorid | 0,021 | 0,571 |

## Analysenwerte des Düngemittels:

| | |
|---|---|
| Trockensubstanz | 98,01 Gew.-% |
| Wasser | 1,99 |
| Rohasche | 65,79 |
| Organische Substanz | 32,22 |
| Gesamt-Stickstoff N (nach Kjeldahl) | 2,13 |
| Gesamt-Phosphor $P_2O_5$ | 2,06 |
| Gesamt-Kalium $K_2O$ | 5,27 |
| Calcium CaO | 30,4 |
| Magnesium MgO | 1,45 |
| Chlorid Cl | 0,14 |
| Kohlensäure $CO_2$ | 20,4 |
| $CaCO_3$ (berechnet aus $CO_2$) | 46,3 |

Das erfindungsgemäße Verfahren zur Herstellung eines Düngemittels mit hohen Gehalten an Kalk, Stickstoff, Phosphor, Kalium und Magnesium ermöglicht eine nutzbringende Verwertung von Nebenprodukten der landwirtschaftlichen Industrie und stellt eine vorbildliche Art einer Rückführung von darin enthaltenen Wertstoffen dar.

**Patentansprüche**

1. Verfahren zur Herstellung eines Düngemittels mit hohem Kalkgehalt und mit zusätzlichen Anteilen an Stickstoff, Phosphor, Kalium und Magnesium, dadurch gekennzeichnet, daß man in der Zuckerindustrie als Nebenprodukt anfallenden Karbonatationskalk auf einen Trockengehalt von etwa 98 Gew.-% trocknet und mit auf etwa 75 Gew.-% Trockengehalt eingedicktem Kartoffelrestfruchtwasser im Mischungsverhältnis von Karbonatationskalk zu Kartoffelrestfruchtwasser von 90:10 bis 50:50 vermischt.

2. Verfahren nach Anspruch 1, dadurch gekennzeichnet, daß man den getrockneten Karbonatationskalk und das eingedickte Kartoffelrestfruchtwasser im Mischungsverhältnis 60:40, jeweils bezogen auf Trockensubstanz, vermischt.

3. Verfahren nach Anspruch 1 oder 2, dadurch gekennzeichnet, daß man ein durch Eindampfen von Kartoffelrestfruchtwasser mit einem Trockensubstanzgehalt von etwa 4 % auf etwa 50 % und anschließendes Eindicken des erhaltenen Kartoffelrestfruchtwasser-Vorkonzentrates auf etwa 75 % Trockensubstanz erhaltenes Konzentrat einsetzt.

4. Verfahren nach einem der Ansprüche 1 bis 3, dadurch gekennzeichnet, daß man das erhaltene Gemisch auf 95-98 Gew.-% Trockensubstanz trocknet und zur Ausbildung eines staubfreien Produktes einer Nachbehandlung unterzieht.

5. Verwendung des nach einem der Ansprüche 1 bis 4 hergestellten Düngemittels als reaktiver Kalkdünger in Zuckerrüben-, Mais- und Kartoffelkulturen.

6. Verwendung des Düngemittels gemäß Anspruch 5, durch einmalige Ausbringung ab etwa 4.000 kg pro ha und Jahr.

**Claims**

1. Process for producing a fertiliser with a high lime content and with additional fractions of nitrogen, phosphorus, potassium and magnesium, characterised in that carbonatation lime produced as a by-product in the sugar industry is dried to a dry content of about 98% by weight and is mixed with residual potato fluid thickened to a dry content of about 75% by weight in a mixing ratio of carbonatation lime to residual potato fluid of 90:10 to 50:50.

2. Process according to claim 1, characterised in that the dried carbonatation lime and the thickened residual potato fluid are mixed in a mixinq ratio of 60:40, based on dry substance in each case.

3. Process according to claim 1 or 2, characterised in that a concentrate is used which is obtained by evaporation of residual potato fluid with a dry substance content of about 4% to about 50% and subsequent thickening of the residual potato fluid pre-condensate obtained to about 75% dry substance.

4. Process according to one of claims 1 to 3, characterised in that the mixture obtained is dried to about 95 to 98% by weight dry substance and is subjected to an after-treatment to form a dust-free product.

5. Use of the fertiliser produced according to one of claims 1 to 4 as a reactive lime fertiliser in sugar beet, maize and potato cultivation.

6. Use of the fertilizer according to claim 5 by a single yield from about 4000 kg per hectare and per year.


**Revendications**

1. Procédé pour la mise en oeuvre d'un engrais à forte teneur en chaux et comportant des constituants supplémentaires d'azote, de phosphore, de potassium et de magnésium, caractérisé en ce que l'on assèche la chaux carbonée obtenue comme sous-produit dans l'industrie sucrière jusqu'à une teneur en matière sèche d'environ 98 % et que l'on mélange celle-ci un sirop résiduel de pomme de terre épaissi à teneur en matière sèche d'environ 75 % dans la proportion de chaux carbonée au sirop résiduel de pomme de terre de 90:10 à 50:50.

2. Procédé selon la revendication 1, caractérisé en ce que l'on mélange la chaux carbonée asséchée et le sirop résiduel de pomme de terre épaissi dans la proportion de 60:40 rapportée chaque fois à la matière sèche.

3. Procédé selon la revendication 1 ou 2, caractérisé en ce que par évaporation du sirop résiduel de pomme de terre ayant une teneur en matière sèche d'environ 4 % à environ 50 % et par épaississement ultérieur du préconcentré du sirop résiduel de pomme de terre obtenu jusqu'à environ 75 % de matière sèche on obtient un concentré.

4. Procédé selon l'une quelconque des revendications 1 à 3, caractérisé en ce que l'on dessèche le mélange obtenu jusqu'à 95 à 98 % de matière sèche et en ce que l'on réalise un traitement ultérieur pour la formation d'un produit non pulvérulent.

5. Application de l'engrais produit selon l'une quelconque des revendications 1 à 4 comme engrais de chaux réactif à la culture des betteraves sucrières, du maïs et des pommes de terre.

6. Application de l'engrais selon la revendication 5 par épandage unique d'environ 4 000 kg par hectare et par an.